# EUROPÄISCHE PATENTSCHRIFT

(11) **EP 2 081 693 B1**
(45) Veröffentlichungstag und Bekanntmachung des Hinweises auf die Patenterteilung: **11.03.2015**
(21) Anmeldenummer: 07818751.5
(22) Anmeldetag: 05.10.2007
(51) Int. Cl.: B05B 13/02, B05B 13/04, B25J 9/00, B25J 9/02

(54) **VORRICHTUNG ZUM LACKIEREN VON WERKSTÜCKEN**
DEVICE FOR PAINTING WORKPIECES
DISPOSITIF DE LAQUAGE DE PIÈCES À USINER

(30) Priorität: 06.10.2006 DE 102006047382
(43) Veröffentlichungstag der Anmeldung: 29.07.2009
(73) Patentinhaber: Venjakob Maschinenbau GmbH & Co. KG, 33378 Rheda-Wiedenbrück (DE)
(72) Erfinder: HAUSER, Wolfgang, 33378 Rheda-Wiedenbrück (DE)
(74) Vertreter: DTS Patent- und Rechtsanwälte Schnekenbühl und Partner mbB
(86) Internationale Anmeldenummer: PCT/EP2007/008675
(87) Internationale Veröffentlichungsnummer: WO 2008/043490

(56) Entgegenhaltungen:
- EP-A- 1 745 858
- EP-A- 1 870 166
- WO-A-00/71292
- US-A- 3 665 148
- US-A- 4 411 940
- US-A- 4 571 149
- US-A1- 2005 013 926
- US-A1- 2005 238 794

## Beschreibung

Die vorliegende Erfindung bezieht auf eine Vorrichtung zum Lackieren von Werkstücken.

Im Stand der Technik gibt es unterschiedliche Möglichkeiten um Werkstücke zu lackieren. Beispiele für existierende Lackiersysteme sind Roboterlackieranlagen mit Flur- und Hängefördersystemen, Spindelkettenförderer oder Flächenspritzlackieranlagen. Jedoch weisen derartige Systeme des Standes der Technik den Nachteil auf, dass bei Werkstücken mit komplizierter Oberflächengeometrie viele Spritzpistolen notwendig sind, lange Rüstzeiten für die Spritzpistolen vorliegen, die Programmierung derartiger Systeme aufwändig ist oder nur geringe Stückzahlen lackiert werden können.

Als Stand der Technik ist des Weiteren die US 2005/0013926 A1 bekannt, welche eine Vorrichtung zum Lackieren eines Werkstücks zeigt, mit einer Spritzpistole, welche rotierbar um eine Achse an einer Lackiermaschine gelagert ist. Die Spritzpistole kann in einer z-Richtung verfahren werden.

Weiter wird die US 2005/0238794 A1 als Stand der Technik angesehen, in welcher eine Vorrichtung zum Lackieren von dreidimensionalen Objekten beschrieben ist, welche relativ zu einer Spritzpistole positioniert werden können, wobei die Spritzpistole zwei Spritzdüsen aufweist, die unabhängig voneinander bewegt werden können.

Auch kann die EP 1 745 858 A2 als Stand der Technik zitiert werden, in welcher eine Beschichtungseinrichtung beschrieben ist, welche zwei oder mehr in einer Lackierkabine angeordnete Applikationsgeräte zur Applikation eines Beschichtungsmittels aufweisen kann. Die Positionierung der Werkstücke erfolgt durch einen von den Applikationsgeräten unabhängigen Roboter.

weiter wird die US 4,273,505 als Stand der Technik angesehen, in welcher ein im Raum bewegbarer Werkstückträger beschrieben ist, welcher an mehreren miteinander gekoppelten Armen gelagert ist, wobei am Ende des letzten Arms eine dilatierbare ballonförmige Membran vorgesehen ist, um hohle Objekte von innen zu greifen und zu handhaben.

Aufgabe der vorliegenden Erfindung ist es daher, eine Vorrichtung bereitzustellen, die auf einfache und kostengünstige Weise eine Lackierung von Werkstücken ermöglicht.

Diese Aufgabe wird durch eine Vorrichtung zum Lackieren mindestens eines Werkstücks gelöst, wobei die Vorrichtung mindestens eine Spritzpistole (10) umfasst, die drehbar und/oder horizontal und/oder vertikal verschiebbar ist und einen Werkstückträger (20) umfasst, der in X-Y-Ebene bewegbar und/oder um eine Rotationsachse (R) drehbar ist, wobei die Spritzpistole (10, 10') zwei Spritzdüsen (11, 11') aufweist, die dreh- und/oder schwenkbar sind.

Unter einer Vorrichtung zum Lackieren von mindestens einem Werkstück versteht man eine Vorrichtung, welche es erlaubt ein Teilespektrum, im Wesentlichen Kunststoffteile zu lackieren. Die dabei lackierten Kunststoffteile können eine dreidimensionale Form aufweisen, und stammen beispielsweise aus dem Automobilbau oder aus dem Phono- und Kommunikationsbereich.

Eingesetzte Farbsysteme beruhen dabei bevorzugt auf einer Wasser- und Lösungsmittelbasis, auf Einkomponenten- oder Zweikomponentensystemen, Metallicsystemen, Softsystemen, Lasersystemen, UV-Systemen, etc.

Bevorzugt wird die erfindungsgemäße Vorrichtung für Losgrößen eingesetzt, die im Bereich von Kleinstlosgrößen, d.h. einem Teil bis maximal ein bis zwei Werkstückträgern pro Minuten liegen.

Das dabei eingesetzte Lackwechselsystem ist bevorzugt fliegend.

Die Werkstücke weisen bevorzugt Abmessungen mit einer maximalen Teilehöhe von 300 mm und einem Grundmaß von bevorzugter Breite mal Länge von 800 x 800 mm auf.

Unter einer Spritzpistole versteht man bevorzugt eine Einrichtung zum Aufbringen von Farbe auf das Werkstück. Die Spritzpistole ist dabei um eine Spritzachse drehbar und/oder horizontal und/oder vertikal verschiebbar. Als Spritzachse kann dabei jene Achse angesehen werden, die parallel zur z-Achse, also vertikal verläuft.

Die Spritzpistole ist bevorzugt auf einer Linearachse angeordnet und weist eine Schnellwechseleinrichtung auf.

Eine Schnellwechseleinrichtung dient bevorzugt dazu, eine Spritzpistole durch eine andere Spritzpistole zu ersetzen, beispielsweise, wenn eine andere Farbe verwendet werden soll oder wenn die Spritzpistole anwendungsspezifische Parameter, beispielsweise mit einem gewissen Sprühkegel aufweisen soll.

Die Pistole weist bevorzugt einen einzelspülbaren Materialdruckregler auf. Unter einzelspülbar versteht man, dass der Lack bzw. die Farbe mit einem Lösungsmittel aus der Spritzpistole, insbesondere der Spritzdüse entfernt wird. Ein Materialdruckregler ist eine Vorrichtung, welche die Farbe bzw. den Lack mit einem gewissen Druck zu der Spritzpistole befördert und bei der Spritzdüse eine gewisse Austrittsgeschwindigkeit aufweist. Die Pistole kann bevorzugt mit verschiedenen Lacken versorgt werden. Die Pistole weist eine definierbare Strahlgeometrie und eine Zerstäubersteuerung auf.

Gemäß eines weiteren Aspekts der vorliegenden Erfindung ist es bevorzugt, dass die Spritzpistole (10, 10') mindestens eine Spritzdüse (11, 11') aufweist, die dreh- und/oder schwenkbar ist.

Bevorzugt weist die Spritzpistole mindestens eine Spritzdüse auf, die schwenk- und/oder drehbar um eine Achse am Ende der Spritzdüse sind. Bevorzugt ist die Spritzdüse um einen Winkel zwischen 0 und 90° schwenkbar und/oder um 360° drehbar. Somit ergibt sich der Vorteil, dass auch Teile des Werkstücks, die mit herkömmlichen Spritzdüsen schwer lackierbar sind, anwendungsspezifisch lackiert werden können.

Unter einem Werkstückträger versteht man eine Vorrichtung zum Aufnehmen und Fixieren von Werkstücken, die in der Vorrichtung zum Lackieren von Werkstücken, die lackiert werden sollen, angeordnet ist.

Der Werkstückträger setzt sich bevorzugt aus Rohren und Kreuzstücken zusammen, bevorzugt aus vier Rohren und vier Kreuzstücken, wobei als Werkstoff bevorzugt PVC verwendet wird. Auf dem Werkstückträger werden bevorzugt Rohrschellen befestigt, die den eigentlichen Werkstückträger, d.h. Hordensiebe, befestigen.

Somit kann ein kostengünstiges und genormtes Werkstückträgersystem zum Aufnehmen der zu lackierenden werkstücke bereitgestellt werden.

Als X-Y Ebene versteht man jene Ebene, die der Werkstückträger aufweist, wenn er waagrecht angeordnet ist, und in der das auf dem Werkstückträger angeordnete Werkstück die größtmögliche Stabilität aufweist.

Als Rotationsachse R kann jene Achse aufgefasst werden, die sich aus der Richtung einer Halterungsstange des Werkstückträgers ergibt, um die der Werkstückträger bevorzugt stufenlos um 360° gedreht werden kann, wobei eine Halterungsstange den Werkstückträger an einer entsprechenden Führung und Halterungspositioniervorrichtung hält.

Durch die Vorrichtung zum Lackieren mindestens eines Werkstückes ergibt sich somit der Vorteil, dass eine Lackierung der Werkstückvorderseite und der Werkstückrückseite auf einfache Art und Weise durchgeführt werden kann, wobei die Oberflächen vollständig lackiert werden können, sodass auch schwer zugängliche Oberflächen des Werkstücks lackiert werden können.

Darüber hinaus kann bei der vorliegenden Erfindung ein Lackwechsel fliegend erfolgen, ein Verarbeiten aller bekannten Lacksysteme ist möglich. Darüber hinaus ist auch eine Nass-in-Nass-Applikation möglich.

Gemäß eines weiteren Aspekts der vorliegenden Erfindung ist es bevorzugt, dass die Vorrichtung mindestens eine weitere Spritzpistole (10') umfasst.

Unter einer weiteren Spitzpistole (10') versteht man eine Spritzpistole, die bevorzugt neben der Spritzpistole (10) auf einer zweiten Linearachse angeordnet ist. Bevorzugt weist die weitere Spitzpistole eine Schnellwechseleinrichtung zum Wechseln der Spritzpistole und einen einzeln spülbaren Materialdruckregler auf. Bevorzugt kann die Spritzpistole mit verschiedenen Lacken versorgt werden und weist eine Strahlgeometrie- und Zerstäubersteuerung auf. Die Spritzpistole (10) und die weitere Spritzpistole (10') bilden bevorzugt ein Spritzpistolenpaar, welches vertikal bewegt werden kann. Bevorzugt kann das Spritzpistolenpaar vertikal geschwenkt werden, bevorzugt um 90° (0° = horizontal; 90° = vertikal).

Bevorzugt kann das Spritzpistolenpaar um eine Vertikalachse um 270° gedreht werden. Bevorzugt werden pro Spritzachse maximal zwei Spritzpistolen angeschlossen. Die beiden Spritzpistolen werden bevorzugt mit unterschiedlichen Farbstoffen bzw. Lacken versorgt und werden bevorzugt getrennt voneinander gesteuert.

Gemäß eines weiteren Aspekts der vorliegenden Erfindung ist es bevorzugt, dass die Spritzpistole (10, 10') an einer Halterung (12, 12') befestigt ist und mittels einer Positioniervorrichtung (13, 13') drehbar und/oder vertikal verschiebbar ist.

Bevorzugt ist die Spritzpistole an einer Halterung befestigt, wobei die Halterung dazu dient, die Spritzpistole an der Spritzachse, die sich aus einer Führung und einer Raupe zusammensetzt, zu halten.

Unter einer Positioniervorrichtung versteht man eine Vorrichtung, um die Spritzpistole in eine anwendungsspezifische und vorherbestimmte Richtung auszurichten. Mittels der Positioniervorrichtung ist es bevorzugt möglich, die Linearachsen der Spritzpistolen zu drehen bzw. vertikal zu verschieben, d.h. in die Z-Richtung, wobei die Höhe der Spritzpistole zum lackierenden Gegenstand verändert wird. Somit ist es möglich den Abstand vom zu lackierenden Gegenstand zu variieren und eine optimale Lackierung des Werkstückes zu erzielen.

Gemäß eines weiteren Aspekts der vorliegenden Erfindung ist es bevorzugt, dass die Halterung (12, 12') an einer Raupe (31, 31') befestigt ist, die auf einer Führung (30) eine horizontale Verschiebung der Spritzpistole (10, 10') erlaubt.

Bevorzugt ist die Halterung an einer Raupe befestigt, wobei die Raupe dazu dient, die Spritzpistole auf einer Führung horizontal mit einer definierten Geschwindigkeit hin und her zu verschieben, und somit für eine gleichförmige Lackierung zu sorgen. Darüber hinaus ist es denkbar, dass sich die Raupe während des Lackiervorgangs in nur eine Richtung bewegt.

Die Raupe bzw. Katze ist dabei bevorzugt eine Vorrichtung wie sie im Stand der Technik zum Bewegen von Bauteilen auf einer Führung verwendet wird.

Bevorzugt können die beiden Lackierachsen in einem synchronen Fahrweg betrieben werden. Jeweils ein Pistolenpaar wird auf einer Lackierachse (S) synchron zu einem anderen Pistolenpaar verschoben. Dabei befinden sich bevorzugt zwei Pistolen auf einer Achse. Insgesamt sind während eines synchronen Fahrwegs 4 Spritzpistolen im Einsatz. Die Anlagenleistung liegt bei ca. ein bis zwei Hordensieben pro Minute oder ist von der Teilgeometrie und dem entsprechenden Lacksystem abhängig.

Weiter ist es bevorzugt, dass die Lackierachsen alternativ arbeiten, d.h. die eine Achse befindet sich in der Lackierkabine zum Lackieren des Werkstücks, und die zweite Lackierachse befindet sich außerhalb in einer Reinigungs- und Lackwechselposition. Somit ergibt sich der Vorteil, dass ein erstes Paar von Spritzpistolen mit einer bestimmten Farbe bzw. einem bestimmten Lack ein Werkstück behandelt, während das zweite Paar von Spritzpistolen einen Reinigungsvorgang vornimmt und sich in einer Lackwechselposition für einen neuen Lack bzw. neue Farbe befindet. Somit ist eine entsprechende Leistung des Lackierautomaten möglich, wobei bevorzugt ein bis zwei Hordensiebe pro Minute bzw. in Abhängigkeit von der Geometrie der Werkstücke und der verwendeten Lacksysteme erzielt werden können.

Gemäß eines weiteren Aspekts der vorliegenden Erfindung ist es bevorzugt, dass der Werkstückträger (20) mittels einer Halterungsstange (52) an einer Halterungspositioniervorrichtung (53) verbunden ist.

Unter einer Halterungsstange versteht man ein Element, welches eine Verbindung zwischen Halterungspositioniereinrichtung und dem Werkstückträger herstellt, wobei die Halterungsstange bevorzugt eine Geometrie einer "Gabel" aufweist. Die Halterungsstange dient bevorzugt dazu, mittels einer Ballonfixierung eine stabile Verbindung mit dem Werkstückträger herzustellen. Dabei ist die Halterungsstange innen hohl, bevorzugt zylinderförmig, und erlaubt ein Durchströmen eines Fluids, bevorzugt von Pressluft von der Halterungspositioniervorrichtung, über das Zwischenstück bis zum zweiten Ende der Halterungsgabel, welche einen ballonförmigen Aufsatz aufweist, welcher sich bei Einströmen des Fluids in seinem Volumen vergrößert und zu einer stabilen Halterung führt, wenn die Halterungsgabel mit der pneumatischen Verbindung in Form eines Ballons in das Gerüst des Werkstückträgers eingeführt wird.

Gemäß eines weiteren Aspekts der vorliegenden Erfindung ist es bevorzugt, dass die Halterungspositioniervorrichtung (53) mit einer Halterungsraupe (51) an einer Halterungsführung (50) verbunden ist.

Unter einer Halterungspositioniereinrichtung versteht man eine Vorrichtung, welche eine Bewegung in der X-Y-Ebene des Werkstückträgers bzw. eine Drehung um die Rotationsachse der Halterungsstange erlaubt. Die Halterungspositioniervorrichtung wird bevorzugt pneumatisch oder elektrisch von einem Motor angetrieben. Die Halterungspositioniervorrichtung ist bevorzugt mit einer Halterungsraupe bzw. -katze an einer Halterungsführung verbunden. Die Halterungsraupe (51) dient dazu die Halterungspositioniervorrichtung in die X-Richtung der X-Y-Ebene zu bewegen. Gleichzeitig weist die Halterungspositioniervorrichtung eine weitere Raupe (51') auf, welche eine Bewegung des Werkstückträgers in die Y-Richtung erlaubt. Somit sind alle Punkte der X-Y-Ebene mittels der Halterungspositioniervorrichtung und den Raupen (51, 51') von dem Werkstückträger in der erfindungsgemäßen Vorrichtung erreichbar.

Gemäß eines weiteren Aspekts der vorliegenden Erfindung ist es bevorzugt, dass die Halterungspositioniervorrichtung (53) mit der Halterungsraupe (51) in der X-Y-Ebene bewegbar ist und/oder eine Drehung um die Rotationsachse (R) der Halterungsstange (52) erlaubt.

Die Möglichkeit, dass die Halterungspositioniervorrichtung mit der Halterungsraupe in der X-Y-Ebene bewegbar ist, und bevorzugt eine Drehung um die Rotationsachse der Halterungsstange erlaubt, bewirkt, dass Werkstücke die auf dem Werkstückträger angeordnet sind und bevorzugt um die Rotationsachse gedreht und/oder in der X-Y-Ebene bewegt werden, vollständig und lückenlos an allen Oberflächen des Werkstücks lackiert werden können.

Gemäß eines weiteren Aspekts der vorliegenden Erfindung ist es bevorzugt, dass die Drehung um die Rotationsachse um 360° erfolgt.

Bevorzugt ist, dass eine Drehung des Werkstückträgers um 360° um die Rotationsachse R erfolgen kann. Dadurch ergibt sich der Vorteil, dass das Werkstück anwendungsspezifisch und optimal lackiert werden kann, da Vorder- und Rückseite eines Werkstücks lückenlos lackiert werden können.

Gemäß eines weiteren Aspekts der vorliegenden Erfindung ist es bevorzugt, dass die weitere Spritzpistole (10') mittels einer weiteren Raupe (31') auf einer weiteren Führung (30') horizontal verschiebbar ist.

Unter der weiteren Spritzpistole (10') versteht man jene Spritzpistole, die sich bevorzugt auf einer zweiten Spritzachse befindet, die bevorzugt parallel zur ersten Spritzachse mit der ersten Spritzpistole (10) angeordnet ist.

Bevorzugt ist die weitere Spritzpistole (10') mittels einer weiteren Raupe (31') auf einer Führung horizontal verschiebbar, wie bereits im Zusammenhang mit der Spritzpistole (10) beschrieben wurde.

Bevorzugt ist die weitere Führung (30') parallel und/oder in gleicher Höhe zur Führung (30) angeordnet. Unter einer Führung versteht man eine Einrichtung, welche eine Bewegung der Raupe, und somit der Spritzpistole in einer vorherdefinierten Richtung vorgibt. Die Führung ist bevorzugt geradlinig ausgerichtet, es ist jedoch auch eine beliebige Ausrichtung denkbar.

Gemäß eines weiteren Aspekts der vorliegenden Erfindung ist es bevorzugt, dass der Werkstückträger (20) über mindestens eine Ballonfixierung von der Halterungsstange (52) gehalten wird.

Unter einer Ballonfixierung versteht man ein Festmachen einer geeigneten Vorrichtung mittels eines Fluids, bevorzugt Luft. Die Vorrichtung weist dabei einen Bauteil auf, welcher einem Ballon entspricht und die Eigenschaft aufweist, dass er bei Einlassen eines Fluids sein Volumen vergrößert und somit zu einer Halterung zwischen einem Gegenstand, in dessen Öffnung er eingeführt wurde, und der Vorrichtung, an welcher sich der Ballon befindet, bevorzugt die Gabel der Halterungsstange, führt.

Gemäß eines weiteren Aspekts der vorliegenden Erfindung ist es bevorzugt, dass die Vorrichtung mindestens eine Verbindung (70) zum Zuführen von Farbe zu den Spritzpistolen (10, 10') aufweist.

Unter einer Verbindung zum Zuführen von Farbe zu der Spritzpistole versteht man bevorzugt eine Leitung, welche eine direkte und unproblematische Bereitstellung von Farbe bzw. Lack von einem Farb- bzw. Lackreservoir an die entsprechende Spitzpistole möglich macht. Bevorzugt ist die Verbindung derart eingerichtet, dass sie eine gezielte Steuerung der Farbzufuhr mittels geeigneter Materialdruckregler erlaubt.

Gemäß eines weiteren Aspekts der vorliegenden Erfindung ist es bevorzugt, dass die Vorrichtung pneumatisch betrieben wird.

Unter pneumatisch betrieben versteht man, dass mittels der Zufuhr von Luft bzw. Pressluft die Raupe bzw. Katze und damit die Halterung der Spritzpistole auf der Führung bewegt werden kann. Dadurch ergibt sich der Vorteil, dass eine anwendungsspezifische Bewegung der Spritzpistole möglich ist.

Gemäß eines weiteren Aspekts der vorliegenden Erfindung ist es bevorzugt, dass die Vorrichtung elektrisch betrieben wird.

Unter elektrisch betrieben versteht man, dass die Halterung auf der Führung und somit die Raupe elektrisch mittels eines elektrischen Motors angetrieben wird. Darüber ergibt sich der Vorteil, dass die Raupe und somit die Spritzpistolen anwendungsspezifisch und definiert bewegt werden können.

Die Aufgabe der vorliegenden Erfindung wird auch durch einen Lackierautomat gelöst, welcher die erfindungsgemäße Vorrichtung (1) zum Lackieren von Werkstücken aufweist und weiter eine Lackierkabine mit mindestens einer Öffnung zum Aufnehmen von zu lackierenden Werkstücken und zum Abgeben lackierter Werkstücke, eine Steuerung zum Betreiben des pneumatischen/elektrischen Antriebs der Vorrichtung (1), eine Lackzufuhrsteuerung, eine Farbwechselvorrichtung, eine Pistolenkopfreinigungsvorrichtung und eine Vorrichtung zum Ableiten von Lackdämpfen umfasst.

Unter einem Lackierautömaten versteht man eine Vorrichtung, in welcher die vorhergehend beschriebene erfindungsgemäße Vorrichtung zum Lackieren von Werkstücken aufgenommen ist. Die erfindungsgemäße Vorrichtung ist dabei in einer Lackierkabine aufgenommen, welche entsprechende Dimensionen bzw. Abmessungen und physikalische Eigenschaften aufweist, um für eine optimale Lackierung von Werkstücken zu sorgen. Die Lackierkabine weist dabei bevorzugt mindestens eine Öffnung auf, wobei die Öffnung zum Aufnehmen von zu lackierenden Werkstücken und zum Abgeben der lackierten Werkstücke dient. Besonders bevorzugt ist es, dass die Lackierkabine zwei Öffnungen aufweist, eine Öffnung zum Aufnehmen von zu lackierenden Werkstücken und eine weitere Öffnung zum Abgeben der lackierten Werkstücke.

Es ist weiter bevorzugt, dass der Lackierautomat eine Steuerung zum Betreiben des pneumatischen und/oder elektrischen Antriebs der erfindungsgemäßen Vorrichtung aufweist. Die Steuerung kann dabei bevorzugt derart ausgestaltet sein, dass die jeweiligen Raupen bzw. Katzen anwendungsspezifisch angesteuert werden und somit eine anwendungsspezifische Bewegung der Spritzpistolen möglich ist. Weiter weist der Lackierautomat bevorzugt eine Lackzufuhrsteuerung auf, welche für eine Zufuhr von Farbe bzw. Lack zu den Spritzpistolen sorgt, wobei anwendungsspezifische Parameter von dem Nutzer des Lackierautomaten vorgebbar sind.

Bevorzugt weist der Lackierautomat weiter eine Vorrichtung zum Ableiten von Lackdämpfen auf. Unter Ableiten versteht man dabei bevorzugt ein Abführen bzw. Ableiten von Abgasen die während des Lackierprozesses auftreten.

Darüber hinaus weist der Lackierautomat bevorzugt eine Spritznebelabsaugung auf. Insbesondere eine Kabine mit "Tripple"-Schlitzabsaugung.

Darüber hinaus weist der Lackierautomat bevorzugt eine Frischluftversorgung über eine separate Zuluftanlage auf.

Weiter weist der Lackierautomat bevorzugt einen integrierten Pistolenreinigungsraum mit Spülstation auf.

Bevorzugt weist der Lackierautomat eine Farbversorgung auf, die die jeweiligen Farb- bzw. Lackkomponenten für die Spritzpistolen zur Verfügung stellt.

Der Lackierautomat weist weiter eine Farbwechselvorrichtung und eine Pistolenreinigungsvorrichtung auf. Bevorzugt befindet sich außerhalb der Lackierkabine in direkter Verlängerung der jeweiligen Lackierachse eine Pistolensprüh- bzw. Pistolenreinigungsvorrichtung für den Pistolenkopf. Die Reinigung des Pistolenkopfs erfolgt dabei mittels eines Lösungsmittels, bevorzugt Wasser durch die Anwendung von Druckluft. Der Farbwechselvorrichtung ist ein Farbwechsel innerhalb eines Nockenwechsels möglich, d.h. während neue Werkstücke in den Lackierautomaten eingebracht werden.

Weiter weist der Lackierautomat bevorzugt eine Palettenzuführeinrichtung auf. Unter einer Palettenzuführeinrichtung versteht man eine Vorrichtung, welche die zu lackierenden Werkstücke zu dem Lackierautomat befördert und in diesen einbringt.

Eine Palettenzuführeinrichtung besteht bevorzugt aus zwei parallelen Riemen, die motorisch angetrieben werden. Darüber hinaus weist die Palettenzuführeinrichtung eine Fixiereinheit über Zangenaushub mit einem Endanschlag auf. Weiter weist die Palettenzuführeinrichtung bevorzugt eine ± 90°-Drehvorrichtung als zusätzliche Option auf. Die einzelnen Komponenten wie die zwei parallelen Riemen, die Fixiereinheit und die Drehvorrichtung sind auf einer Teleskopeinrichtung zum Zuführen und zum "Entladen" von Werkstücken an den Lackierautomaten montiert.

Bevorzugt wird die Palettenzuführeinrichtung von dem Lackierautomaten bei der Öffnung des Lackierautomaten angeordnet und dient zum Beladen des Werkstückträgers, welcher in dem Lackierautomaten angeordnet ist.

Darüber hinaus weist der Lackierautomat eine Palettenübernahmeeinrichtung auf, die sich außerhalb des Lackierautomaten befindet und dazu dient, die lackierten Werkstücke aufzunehmen.

Wie die Palettenzuführeinrichtung weist die Palettenübernahmeeinrichtung zwei parallele Riemen auf, die motorisch angetrieben werden. Eine Fixiereinheit über Zangenaushub mit Endanschlag und eine ± 90°-Drehvorrichtung als weitere Option auf. Die einzelnen Komponenten der Palettenübernahmeeinrichtung sind auf einer Teleskopeinrichtung montiert, welche zum "Entladen" des Lackierautomaten von lackierten Werkstücken dienen. Die Palettenübernahmeeinrichtung ist dabei bevorzugt an der mindestens einen Öffnung des Lackierautomaten oder besonders bevorzugt an einer weiteren Öffnung des Lackierautomaten angeordnet.

Die Erfindung wird auch durch ein Verfahren zum Lackieren von Werkstücken mit der erfindungsgemäßen Vorrichtung gelöst, wobei das Verfahren die Schritte eines Aufbringens und Fixierens eines Werkstücks auf dem Werkstückträger (20), eines Verschiebens und/oder Drehens des Werkstückträgers (20) in eine anwendungsspezifische Position, eines Bewegens mindestens einer Spritzpistole (10, 10') in eine anwendungsspezifische Horizontal- und/oder Vertikal- und/oder Rotationsbewegung nach einem vorherdefinierten Ablauf, eines Drehens und/oder Schwenkens von zwei an der Spritzpistole (10, 10') angeordneten Spritzdüsen (11, 11'), und eines Entfernens der Werkstücke von dem Werkstückträger aufweist.

Unter einem Schritt des Einbringens und Fixierens eines Werkstücks auf einem Werkstückträger versteht man, dass mittels der zuvor beschriebenen Palettenzuführeinrichtung die zu lackierenden Werkstücke auf dem Werkstückträger aufgebracht werden können. Mittels der Fixiereinheit über Zangenaushub mit einem Schlag und der ± 90°-Drehvorrichtung werden die Werkstücke mittels der zuvor beschriebenen Teleskopeinrichtung auf den Werkstückträger in der Vorrichtung des Lackierautomaten eingebracht.

Unter dem Schritt des Verschiebens und/oder Drehens des Werkstückträgers in eine anwendungsspezifische Position versteht man, dass der Werkstückträger mittels der vorhergehend beschriebenen Raupen und der Halterungspositioniervorrichtung in die jeweilige gewünschte Position relativ zu den Spritzpistolen gedreht bzw. verschoben werden kann und somit eine gleichförmige und optimale Lackierung gewährleistet wird.

Unter einem Bewegen von mindestens einer Spritzpistole in eine anwendungsspezifische Horizontal - und/oder Vertikal - und/oder Rotationsbewegung versteht man, dass die Spritzpistolen mittels der vorhergehend beschriebenen Positioniervorrichtungen, Raupen bzw. Katzen der Führungen horizontal - und/oder - vertikal oder mittels einer Drehbewegung bewegt werden können. Dabei ist es bevorzugt, dass der jeweilige Bewegungsablauf vorherdefiniert vom Nutzer der Lackiervorrichtung definiert bzw. bestimmt wird. Der entsprechende Bewegungsablauf kann dabei über eine Software, welche die Vorrichtung der Lackiervorrichtung steuert, durchgeführt werden.

Unter dem Schritt eines Entfernens der Werkstücke von dem Werkstückträger versteht man, dass mittels der vorhergehend beschriebenen Palettenübernahmeeinrichtung die Werkstücke von dem Werkstückträger der Vorrichtung entfernt bzw. "entladen" werden. Der vorhergehende Schritt des Aufbringens bzw. des Entfernens der werkstücke kann dabei über mindestens eine Öffnung in der Lackierkabine erfolgen.

Bevorzugte Ausführungsformen der Erfindung werden nachfolgend anhand der beigefügten Zeichnung näher erläutert.
In **Figur 1** ist eine Draufsicht auf eine bevorzugte Ausführungsform der vorliegenden Erfindung dargestellt.
Die **Figuren 2a und 2b** zeigen die Positioniervorrichtung der Lackiervorrichtung.
In **Figur 3a** ist eine Seitenansicht der Lackiervorrichtung mit einer Palettenzuführeinrichtung dargestellt.
In **Figur 3b** ist eine Draufsicht auf die Lackiervorrichtung mit der Palettenzuführeinrichtung dargestellt.
In **Figur 4** ist eine perspektivische Ansicht der Führung der Raupe und der Halterungsstange in Form einer "Gabel" für den Werkstückträger dargestellt.
In den **Figuren 5a** und **5b** ist die Gabel für den Werkstückträger dargestellt.

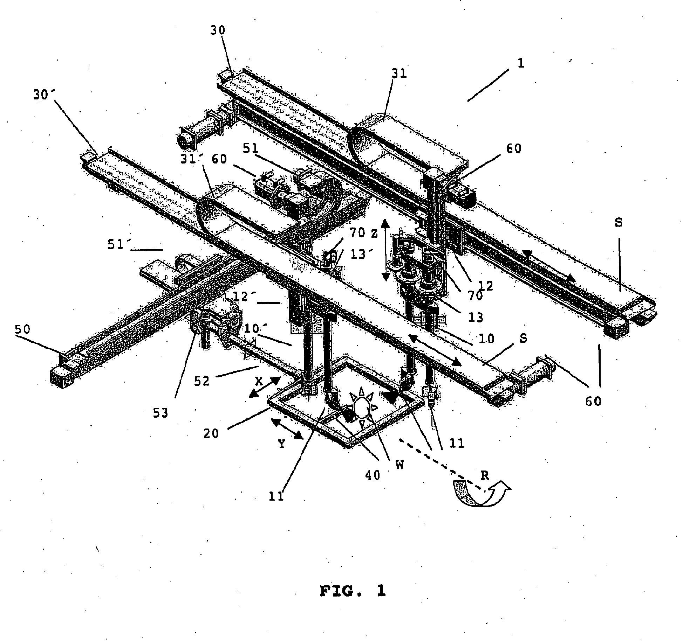

In **Figur 1** ist eine Draufsicht des Lackierautomaten der vorliegenden Erfindung dargestellt. Die bevorzugte Ausführungsform setzt sich aus zwei zueinander parallelen Lackierachsen S zusammen, an welchen die Lackierpistolen 10, 10' angeordnet sind, und aus einem Werkstückträger 20, welcher an einer Halterungsstange 52 und Halterungspositioniervorrichtung 53 befestigt ist.

Die erste Spritzpistole 10 der Lackiervorrichtung 1 der vorliegenden Erfindung setzt sich aus Spritzdüsen 11, einer Halterung 12, und einer Positioniervorrichtung 13 zusammen.

Die Spritzdüsen 11 sind sowohl um 270° drehbar als auch und 90° schwenkbar.

Die Positioniervorrichtung 13 ist mit der Halterung 12 verbunden, wobei die Halterung 12 an einer seitlichen Führung der Führung 30 beweglich angeordnet ist.

Gleichzeitig ist die Halterung 12 mit einer Raupe 31 verbunden, welche eine spätere horizontale Bewegung der Spritzpistole erlaubt.

In gleicher Weise ist die Spritzpistole 10' mit einer Halterung 12' und einer Positioniervorrichtung 13' verbunden, die an einer Führung 30' beweglich angeordnet ist und in Verbindung mit einer Raupe 31' steht.

Die Führung 30' ist dabei parallel und in gleicher Höhe zu der Führung 30 angeordnet.

Die Führung 30, 30' weist dabei eine Länge von drei Metern auf. Der Abstand der Spritzdüsen kann zwischen einem Meter und 30 Zentimeter von der Unterseite der Führung entfernt werden, womit sich ein Minimalabstand von 10 cm bis 80 cm von dem Werkstück ergibt.

Weiter ist in Figur 1 die Führung 50 des Werkstückträgers 20 dargestellt, wobei an der Führung eine Halterungspositioniervorrichtung 53 sowie eine Raupe 51 zum Verschieben der Halterungspositioniervorrichtung entlang der Führung 50 angeordnet ist.

Die Halterungspositioniervorrichtung 53 dient dabei für eine Verschiebung des Werkstückträgers 20 entlang der Y-Achse, wobei der Werkstückträger über die Halterungsstange 52 mit der Halterungspositioniervorrichtung 53 in Verbindung steht.

Bei dem erfindungsgemäßen Verfahren wird das Werkstück mittels der Palettenzuführeinrichtung zu der Vorrichtung 1 in dem Lackierautomaten an einer ersten Öffnung des Lackierautomaten eingebracht (nicht dargestellt).

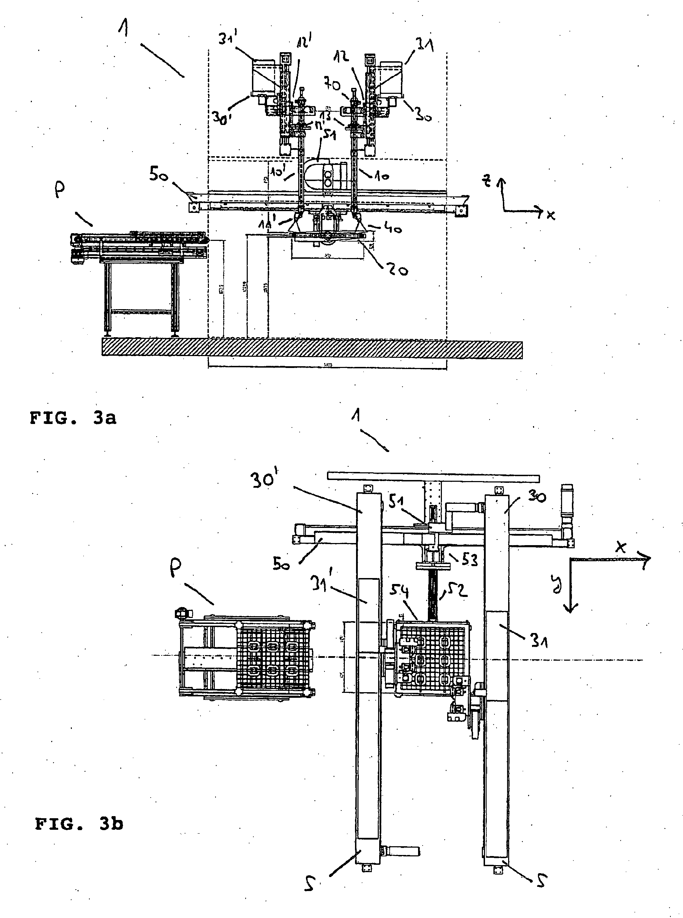

In der vorliegenden **Figur 1** ist ersichtlich, dass sich das Werkstück W bereits auf dem Werkstückträger befindet, wobei das Werkstück W durch ein Hordensieb (aus Gründen der Übersichtlichkeit wurde das Hordensieb nicht dargestellt, es ist allerdings in Fig. 3a und 3b sichtbar) gehalten und fixiert.

Sobald das Werkstück auf den Werkstückträger 20 mittels der Palettenzuführeinrichtung aufgebracht wurde, setzt sich die Raupe 51 der Führung 50 des Werkstückträgers in Bewegung und bewegt die Halterungspositioniervorrichtung 53 in die gewünschte X-Richtung, welche als Ausgangspunkt für den Start des Lackierprozesses dient.

Ebenso wird durch die Raupe 51' des Werkstückträgers der Werkstückträger in die gewünschte Y-Position gebracht. Im vorliegenden Fall wünscht der Anwender, dass zunächst die Oberseite des Werkstücks W lackiert wird, daher wird mittels der Halterungspositioniervorrichtung 53 die Halterungsstange 52 vorläufig nicht gedreht.

Nachdem ein Nutzer mit der Ausgangsposition des Lackierprozesses für das Werkstück einverstanden ist, wird der weitere Vorgang des Lackierprozesses eingeleitet. Dabei setzt sich zunächst die erste Spritzpistole in Bewegung, die sich vorher in der Farbwechsel- und Pistolenkopf-Reinigungs-Position des Lackierautomaten (nicht dargestellt) befunden hat.

Mittels der Positioniervorrichtung 13 werden die Spritzdüsen 11 der Spritzpistole 10 in die entsprechende Startposition gebracht, die sich in unmittelbarer Nähe der Startposition des zu lackierenden Werkstückes befindet. Die Spritzpistole 10 führt dabei eine Bewegung entlang der Lackierachse S durch, die einer Hin- und Herbewegung entspricht. Dabei wird die Spritzpistole 10 durch die Raupe 31 auf der Führung 30 in der Y-Achse um eine Distanz bewegt, die in etwa den Abmessungen des Werkstückträgers, in diesem Falle 50 cm, entspricht. Gleichzeitig bewegt sich die Raupe 51 mit der Halterungspositioniervorrichtung 53 für den Werkstückträger 20 gleichförmig entlang der X-Richtung. Die Geschwindigkeit beträgt dabei 1 Meter pro Minute.

Nachdem eine erste Lackschicht mit der Spritzpistole 10 aufgetragen wurde, wird die Spritzpistole 10 mittels der Raupe 31 in die Farbwechsel- und Pistolenkopfreinigungsposition gebracht. Unmittelbar nachdem die Spritzpistole den ersten Lackiervorgang beendet hat, bewegt sich die Spritzpistole 10' mit der Raupe 30' entlang der Lackierachse S auf der Führung 30', bis sie die Position des bereits lackierten Werkstücks erreicht hat. Zuvor wurde jedoch das Werkstück durch die Halterungspositioniervorrichtung 53 um 180° gewendet, so dass der Spritzpistole 10' jetzt die Unterseite des Werkstücks W gegenüberliegt.

In diesem Moment beginnt die Spritzpistole 10' mit dem Lackiervorgang, welcher in der gleichen Weise wie mit der Spritzpistole 10 abläuft.

Nachdem der Lackiervorgang beendet ist, wird die Spritzpistole 10' in die Farbwechsel- und Pistolenkopfreinigungsposition des Lackierautomaten gebracht.

In der Zwischenzeit wurde die Spritzpistole 10 mittels Wasser und Druckluft gereinigt und ein Farbwechsel vorgenommen.

Im ersten Lackiervorgang wurde rote Farbe verwendet, jetzt wird blaue Farbe für die Spritzpistole 10 verwendet. Ebenso wird eine Pistolenkopfreinigung bei der Spritzpistole 10' durchgeführt. Anstelle der grünen Farbe wird ebenso blaue Farbe verwendet. Nach dem Farbwechselvorgang werden beide Spritzpistolen 10 und 10' in unmittelbare Nähe des Werkstücks gebracht, wobei der Abstand der Spritzdüsen von der Oberfläche des Werkstücks ca. 10 cm beträgt.

Die beiden Spritzpistolen 10 und 10' beginnen gleichzeitig mit dem Sprühvorgang, wobei die Einspritzdüsen derart ausgerichtet sind, dass das Werkstück gleichmäßig mit blauer Farbe bestrahlt wird. In **Figur 1** sind die entsprechenden Farbkegel 40 dargestellt.

Nachdem der Lackiervorgang abgeschlossen ist, bewegen sich die Spritzpistolen 10 und 10' wieder in ihre Ausgangsposition zu den Farbwechsel- und Pistolenkopfreinigungspositionen.

Der Werkstückträger bewegt sich mit dem lackierten Werkstück W, welches an der Unterseite mit blauer Farbe und an der Oberseite mit roter Farbe lackiert wird, zur Öffnung (nicht dargestellt) des Lackierautomaten, wobei das Werkstück mittels einer Palettenübernahmeeinrichtung aus dem Lackierautomaten entnommen wird und gleichzeitig (nicht dargestellt) mittels einer Palettenzuführeinrichtung über eine zweite Öffnung ein neues zu lackierendes Werkstück in den Lackierautomaten, wie vorhergehend beschrieben wurde, eingebracht wird.

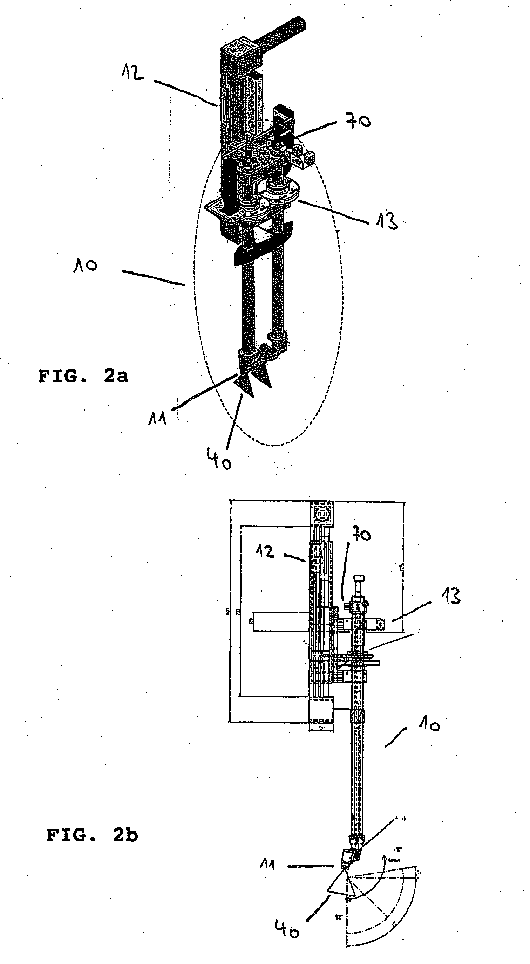

In den **Figuren 2a und 2b** ist eine Positioniervorrichtung 13 und eine Halterung 12 der Spritzpistolen dargestellt. Wie ersichtlich ist, weist die Positioniervorrichtung zwei Achsen auf, die zwei Spritzdüsen 11 aufweist.

Ebenso weist die Spritzpistole 10 eine Halterung 12 auf. Die Halterung 12 weist ein Getriebe und einen Motor (nicht dargestellt) auf, welcher eine vertikale Bewegung der Positioniervorrichtung und somit der Spritzpistole ermöglicht. Die Halterung dient der Befestigung der Spritzpistole an der Raupe der Führung 30 bzw. 30'. Weiter ermöglicht die Positioniervorrichtung 13 eine Drehung um die Pistolenachse, welche parallel zur z-Achse verläuft, wenn die Spritzpistole vertikal ausgerichtet ist, womit eine individuelle Einstellung der Spritzdüsen der Spritzpistole erzielt werden kann.

Die dargestellten Spritzdüsen 11 sind wie bereits vorhergehend erläutert wurde dreh- und schwenkbar, wie in **Figur 2b** dargestellt ist. Darüber hinaus ergibt sich ein entsprechender Farbkegel 40.

Darüber hinaus weist die Spritzpistole eine Verbindung 70 auf, mit welcher Farbe zu den Spritzpistolen durch den Materialdruckregler zugeführt werden kann.

In **Figur 3a** ist eine Seitenansicht der Lackiervorrichtung 1 dargestellt. Im oberen Teil sind die Spritzpistolen 10, 10' mit dem entsprechenden Spritzdüsen 11, 11', die Halterung 12, 12' und die Positioniervorrichtung 13, 13' dargestellt.

Weiter ist der Werkstückträger 20 sowie die Führung des Werkstückträgers 50 und die Raupe des Werkstückträgers 51 ersichtlich.

Links von der Lackiervorrichtung 1 befindet sich die Palettenzuführeinrichtung P, wobei erkennbar ist, dass die obere Höhe der Palettenzuführeinrichtung der Höhe des Werkstückträgers entspricht, damit es zu einem leichten Be- bzw. Entladen der Werkstücke kommen kann.

In **Figur 3b** ist eine Draufsicht der Lackiervorrichtung 1 und der Palettenzuführeinrichtung P bzw. der Palettenübernahmeeinrichtung P erkennbar.

Im linken Teil der Figur 3b ist die Palettenzuführeinrichtung P der zu lackierenden Werkstücke erkennbar. Im rechten Teil der Figur 3b sind die Führung 30 und 30', bzw. die Raupen 31 und 31' sowie der Werkstückträger 20 mit der Führung 50, die Raupe 51, die Halterungsstange 52 und die Halterungspositioniervorrichtung 53 erkennbar.

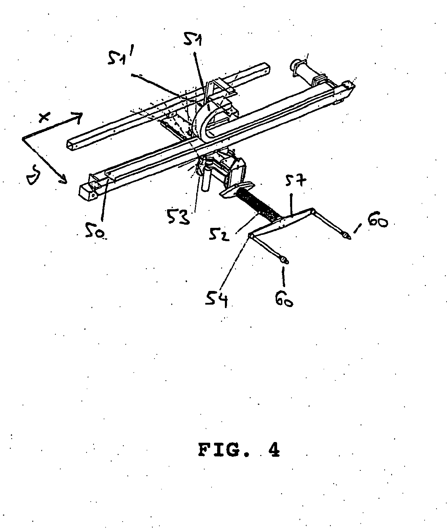

In **Figur 4** ist die Führung 50 des Werkstückträgers, die Raupe 51 des Werkstückträgers 20, die Halterungsstange 52 des Werkstückträgers, die Halterungspositioniervorrichtung 53 und die beiden Halterungsgabeln 54 mit der pneumatischen Verbindung 60 in Form einer Ballonfixierung dargestellt.

Die Halterungsgabel 54 weist dabei eine pneumatische Verbindung 60 an ihren Endstücken auf und ist über ein Zwischenstück mit der Halterungsstange 52 und somit mit der Halterungspositioniervorrichtung 53 verbunden.

Die Halterungspositioniervorrichtung 53 ist dabei mit der Raupe 51 verbunden, welche auf der Führung 50 bewegt werden kann. Nicht dargestellt ist die Raupe 51' für die Halterungspositioniervorrichtung 53, welche eine Bewegung in der Y-Richtung erlaubt, während die Raupe 51 des Werkstückträgers eine Bewegung in der X-Richtung erlaubt.

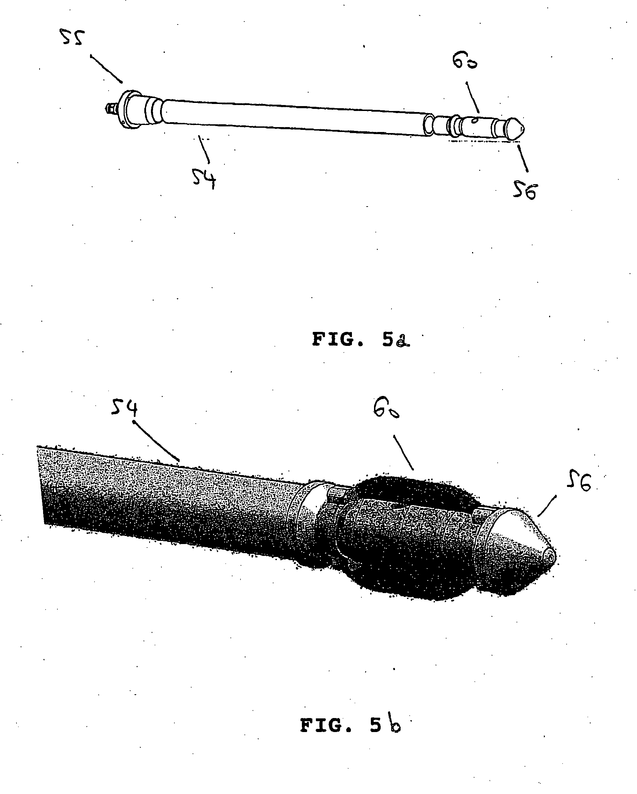

Abschließend wird in den **Figuren 5a und 5b** ein Teil der Halterungsgabel 54 dargestellt, wobei die Halterungsgabel ein erstes Ende 55 und ein zweites Ende 56 aufweist.

Das erste Ende 55 ist dabei mit einem Zwischenstück 57 verbunden, mit welchem die Halterungsstange 52 für den Werkzeugträger verbunden ist.

An ihrem zweiten Ende 56 weist die Halterungsgabel 54 eine pneumatische Verbindung 60 auf, mittels welcher eine Ballonfixierung mit dem Werkstückträger 20 hergestellt werden kann.

Der Werkstückträger weist dabei eine Zusammensetzung aus Rohren (nicht dargestellt) auf, welche entsprechende Öffnungen aufweisen, in welche die Halterungsgabel 54 bzw. das zweite Ende 56 der Halterungsgabel mit der pneumatischen Verbindung 60 eingeführt werden kann.

In die pneumatische Verbindung 60 wird ein Fluid bzw. Druckluft über die Positioniereinrichtung entlang der hohlen Halterungsstange 52 über das Zwischenstück 57 bis zum zweiten Ende 56 der Halterungsgabel 54 eingebracht, wodurch sich das Volumen der pneumatischen Verbindung, die die Form eines Ballons aufweist, vergrößert und somit zu einer Verbindung zwischen dem Rahmen des Werkstückträgers 20 und der Halterungsgabel 54 führt.

Nachdem eine Ballonfixierung auf pneumatische Weise mit dem Werkstückträger 20 hergestellt wurde, ist es möglich, den Werkstückträger stabil um die Achse der Halterungsstange 52 zu drehen bzw. zu bewegen.

### Bezugszeichenliste

1 Lackiervorrichtung

10, 10' Spritzpistole
11, 11' Spritzdüsen
12. 12' Halterung
13, 13' Positioniervorrichtung

20 Werkstückträger

30, 30' Führung
31, 31' Raupe

40 Farbkegel
50 Führung des Werkstückträgers
51 Raupe des Werkstückträgers für X-Bewegung
51' Raupe des Werkstückträgers für Y-Bewegung
52 Halterungsstange für Werkstückträger
53 Halterungspositioniervorrichtung
54 Halterungsgabel
55 erstes Ende
56 zweites Ende
57 Zwischenstück

60 pneumatische Verbindung

70 Farbzuführvorrichtung

P Palettenzuführeinrichtung/Palettenübernahmeeinrichtung
S Lackierachse
W Werkstück

## Patentansprüche

1. Vorrichtung (1) zum Lackieren mindestens eines Werkstücks (W), umfassend:
mindestens eine Spritzpistole (10, 10'), die drehbar und/oder horizontal und/oder vertikal verschiebbar ist; und
einen Werkstückträger (20), der in einer X-Y-Ebene bewegbar und/oder um eine Rotationsachse (R) drehbar ist, **dadurch gekennzeichnet, dass** die Spritzpistole (10, 10') zwei Spritzdüsen (11, 11') aufweist, die dreh- und/oder schwenkbar sind.

2. Vorrichtung gemäß Anspruch 1, umfassend mindestens eine weitere Spritzpistole (10').

3. Vorrichtung gemäß Anspruch 1 oder Anspruch 2, wobei die Spritzpistole (10, 10') an einer Halterung (12, 12') befestigt ist und mittels einer Positioniervorrichtung (13, 13') drehbar und/oder vertikal verschiebbar ist.

4. Vorrichtung gemäß Anspruch 3, wobei die Halterung (12, 12') an einer Raupe (31, 31') befestigt ist, die auf einer Führung (30, 30') eine horizontale Verschiebung der Spritzpistole (10, 10') erlaubt.

5. Vorrichtung gemäß einem der vorhergehenden Ansprüche, wobei der Werkstückträger (20) mittels einer Halterungsstange (52) an einer Halterungspositioniereinrichtung (53) verbunden ist.

6. Vorrichtung gemäß Anspruch 5, wobei die Halterungspositioniervorrichtung (53) mit einer Halterungsraupe (51) an einer Halterungsführung (50) verbunden ist.

7. Vorrichtung gemäß Anspruch 6, wobei die Halterungspositioniervorrichtung (53) mit der Halterungsraupe (51) in der X-Y-Ebene bewegbar und/oder eine Drehung um eine Rotationsachse (R) die Halterungsstange (52) erlaubt.

8. Vorrichtung gemäß Anspruch 7, wobei die Drehung um die Rotationsachse um 360° erfolgt.

9. Vorrichtung gemäß einem der vorhergehenden Ansprüche, wobei die Vorrichtung eine Führung (30) und eine weitere Führung (30') aufweist, und wobei die weitere Führung (30') parallel und/oder in gleicher Höhe zur Führung (30) angeordnet ist.

10. Vorrichtung gemäß einem der vorhergehenden Ansprüche, wobei der Werkstückträger (20) über mindestens eine Ballonfixierung von der Halterungsstange (52) gehalten wird.

11. Vorrichtung gemäß einem der vorhergehenden Ansprüche, wobei die Halterungsstange eine Halterungsgabel (54) mit einer pneumatischen Verbindung (60) aufweist.

12. Vorrichtung gemäß einem der vorhergehenden Ansprüche, wobei die Vorrichtung mindestens eine Verbindung (70) zum Zuführen von Farbe zu den Spritzpistolen (10, 10') aufweist.

13. Vorrichtung gemäß einem der vorhergehenden Ansprüche, wobei die Vorrichtung pneumatisch oder elektrisch betrieben wird.

14. Lackierautomat, umfassend
eine Vorrichtung (1) zum Lackieren von Werkstücken gemäß einem der vorhergehenden Ansprüche,
eine Lackierkabine mit mindestens einer Öffnung zum Aufnehmen von zu lackierenden Werkstücken und zum Abgeben lackierter Werkstücke,
eine Steuerung zum Betreiben eines pneumatischen oder elektrischen Antriebs der Vorrichtung (1),
eine Lackzufuhrsteuerung,
eine Farbwechsel-Vorrichtung,
eine Pistolenkopfreinigungsvorrichtung, und
eine Vorrichtung zum Ableiten von Lackdämpfen.

15. Verfahren zum Lackieren von Werkstücken mit einer Vorrichtung gemäß den Ansprüchen 1 bis 13, umfassend die Schritte:
Aufbringen und Fixieren eines Werkstücks auf dem Werkstückträger (20),
Verschieben und/oder Drehen des Werkstückträgers (20) in eine anwendungsspezifische Position,
Bewegen mindestens einer Spritzpistole (10, 10') in einer anwendungsspezifischen Horizontal- und/oder Vertikal- und/oder Rotationsbewegung nach einem vorherdefinierten Ablauf, Drehen und/oder Schwenken von zwei an der Spritzpistole (10, 10') angeordneten Spritzdüsen (11, 11'), und
Entfernen des Werkstücks von dem Werkstückträger.

## Claims

1. Device (1) for painting at least one workpiece (W), comprising:
at least one spray gun (10, 10') which is rotatable and/or horizontally and/or vertically displaceable;
and
a workpiece carrier (20) which is movable in an X-Y plane and/or rotatable about an axis of rotation (R), **characterized in that** the spray gun (10, 10') has two spray nozzles (11, 11') which are rotatable and/or pivotable.

2. Device according to claim 1, comprising at least one further spray gun (10').

3. Device according to claim 1 or claim 2, wherein the spray gun (10, 10') is attached to a holder (12, 12') and is rotatable and/or vertically displaceable by means of a positioning device (13, 13').

4. Device according to claim 3, wherein the holder (12, 12') is attached to a track (31, 31') which allows a horizontal displacement of the spray gun (10, 10') on a guide (30, 30').

5. Device according to one of the previous claims, wherein the workpiece carrier (20) is connected to a holder positioning apparatus (53) by means of a holder rod (52).

6. Device according to claim 5, wherein the holder positioning device (53) is connected to a holder guide (50) using a holder track (51).

7. Device according to claim 6, wherein the holder positioning device (53) is movable in the X-Y plane using the holder track (51) and/or allows a rotation about an axis of rotation (R) of the holder rod (52).

8. Device according to claim 7, wherein the rotation about the axis of rotation takes place by 360°.

9. Device according to one of the previous claims, wherein the device has a guide (30) and a further guide (30'), and wherein the further guide (30') is arranged parallel to and/or at the same height as the guide (30).

10. Device according to one of the previous claims, wherein the workpiece carrier (20) is held by the holder rod (52) via at least one balloon joint.

11. Device according to one of the previous claims, wherein the holder rod has a holder prong (54) with a pneumatic connection (60).

12. Device according to one of the previous claims, wherein the device has at least one connection (70) for feeding paint to the spray guns (10, 10').

13. Device according to one of the previous claims, wherein the device is operated pneumatically or electrically.

14. Automatic painting machine, comprising
a device (1) for painting workpieces according to one of the previous claims,
a painting booth with at least one opening for receiving workpieces to be painted and for delivering painted workpieces,
a controller for operating a pneumatic or electric drive of the device (1),
a paint-feeding controller,
a paint-changing device,
a gun head cleaning device, and
a device for discharging paint vapours.

15. Method of painting workpieces with a device according to claims 1 to 13, comprising the steps:
depositing and fixing a workpiece on the workpiece carrier (20),
displacing and/or rotating the workpiece carrier (20) into an application-specific position,
moving at least one spray gun (10, 10') in an application-specific horizontal and/or vertical and/or rotational movement according to a previously defined sequence, rotating and/or pivoting two spray nozzles (11, 11') arranged on the spray gun (10, 10'), and
removing the workpiece from the workpiece carrier.

## Revendications

1. Dispositif (1) de laquage d'au moins une pièce à usiner (W), comprenant :
au moins un pistolet pulvérisateur (10, 10') pouvant être déplacé en rotation et/ou horizontalement et/ou verticalement ; et
un support de pièce à usiner (20) pouvant être déplacé dans un plan X-Y et/ou pouvant tourner autour d'un axe de rotation (R) ;
**caractérisé en ce que** le pistolet pulvérisateur (10, 10') comporte deux buses de pulvérisation (11, 11') pouvant tourner et/ou pivoter.

2. Dispositif selon la revendication 1, comprenant au moins un pistolet pulvérisateur (10') supplémentaire.

3. Dispositif selon la revendication 1 ou la revendication 2, le pistolet pulvérisateur (10, 10') étant fixé à un support (12, 12') et pouvant être déplacé en rotation et/ou verticalement à l'aide d'un dispositif de positionnement (13, 13').

4. Dispositif selon ta revendication 3, la fixation (12, 12') étant fixée à une lèvre (31, 31') permettant un déplacement horizontal du pistolet pulvérisateur (10, 10') sur un guide (30, 30').

5. Dispositif selon l'une des revendications précédentes, le support de pièce à usiner (20) étant relié à l'aide d'une tige de support (52) à un dispositif de positionnement de support (53).

6. Dispositif selon la revendication 5, le dispositif de positionnement de support (53) étant relié à une lèvre de support (51) au niveau d'un guide de support (50).

7. Dispositif selon la revendication 6, le dispositif de positionnement de support (53) pouvant être déplacé dans le plan X-Y au moyen de la lèvre de support (51) et/ou la tige de support (52) permettant d'effectuer une rotation autour d'un axe de rotation (R).

8. Dispositif selon la revendication 7, la rotation autour de l'axe de rotation se produisant sur 360°.

9. Dispositif selon l'une des revendications précédentes, le dispositif comportant un guide (30) et un guide (30') supplémentaire, le guide (30') supplémentaire étant agencé parallèlement et/ou à même hauteur que le guide (30).

10. Dispositif selon l'une des revendications précédentes, le support de pièce à usiner (20) étant maintenu par la tige de support (52) via au moins une fixation de ballon.

11. Dispositif selon l'une des revendications précédentes, la tige de support comportant une fourche de support (54) équipée d'une liaison pneumatique (60).

12. Dispositif selon l'une des revendications précédentes, le dispositif comportant au moins une liaison (70) permettant d'amener de la peinture aux pistolets pulvérisateurs (10, 10').

13. Dispositif selon l'une des revendications précédentes, le dispositif étant entraîné de façon pneumatique ou électrique.

14. Automate de laquage, comprenant :
un dispositif (1) de laquage de pièces à usiner selon l'une des revendications précédentes ;
une cabine de laquage équipée d'au moins une ouverture permettant de recevoir les pièces à usiner à laquer et de renvoyer les pièces à usiner laquées ;
une commande permettant de commander un entraînement pneumatique ou
électrique du dispositif (1) ;
une commande d'amenée de peinture ;
un dispositif de changement de peinture ;
un dispositif de nettoyage de tête de pistolet ; et
un dispositif d'évacuation des vapeurs de peinture.

15. Procédé de laquage de pièces à usiner à l'aide d'un dispositif selon les revendications 1 à 13, comprenant les étapes suivantes :
mise en place et fixation d'une pièce à usiner sur le support de pièce à usiner (20) ;
déplacement et/ou rotation du support de pièce à usiner (20) dans une position spécifique à l'application ;
déplacement d'au moins un pistolet pulvérisateur (10, 10') dans un mouvement horizontal et/ou vertical et/ou tournant spécifique à l'application en suivant une trajectoire, une rotation et/ou un pivotement prédéfinis de deux buses de pulvérisation (11, 11') disposées au niveau du pistolet pulvérisateur (10, 10') ; et
retrait de la pièce à usiner hors du support de pièce à usiner.
